# EUROPEAN PATENT APPLICATION

(11) **EP 4 242 182 A1**
(43) Date of publication of application: **13.09.2023**
(21) Application number: 22161590.9
(22) Date of filing: 11.03.2022
(51) Int. Cl.: C04B 28/02, C04B 40/00

(54) **GRAPHENIC PREPARATIONS FOR CEMENT AND CONCRETE**

(71) Applicant: Waypigments S.r.l., 20122 Milano (IT)
(72) Inventor: BROGGI, Giovanni, 20121 MILANO (IT)
(74) Representative: Cattaneo, Elisabetta

(57) **Abstract**

The invention concerns a graphenic preparation and a graphene-based cementi tious composition, comprising: - a filler selected from the group consisting of calcium carbonate, silica, kaolinite and limestone; - graphene, in an amount ranging from 0.1 to 10% by weight, with respect to amount of the graphenic preparation; and - at least one cementious additive, in an amount ranging from 3 to 40% by weight, with respect to amount of the graphenic preparation selected from the group consisting of a poly-alkyl naphthalene sulfonate, a phosphoric ester of polyoxyethylenated fatty alcohols, lignin sulfonate, sulphated melamine formaldehyde resin, sodium polycarboxylate, polyacrylate ammonium salt, a phosphoric ester and an alkoxylated phosphoric ester; wherein each of the above components is in solid-dry state. Advantageously, the invention relates to a cementitious composition and a concrete comprising the graphenic preparation.

## Description

### FIELD OF THE INVENTION

The present invention concerns a graphenic preparation, a graphene-based cementious composition, a graphene-based concrete, and an environmentally friendly method of production.

### STATE OF THE ART

Concrete is one of the most durable and cost-effective construction materials, employed for instance in the construction of buildings, bridges or roads.

The widespread usage of concrete is due to the optimal combination of properties of its component materials, which confers respectively compressive and tensile strength. When the concrete is reinforced with steel bars the final material is most used in the building construction. In fact, this cooperation of the materials is possible also thanks to the fact that they have similar coefficients of thermal expansion, thus avoiding large internal mechanical stresses upon temperatures changes.

The base of the concrete component is generally the so-called "Ordinary Portland Cement" (OPC).

In recent years, other cement compositions are gaining commercial interest. One of these is calcium sulfoaluminate (CSA) cements which, although more expensive, offer several advantages over OPC.

A first advantage of CSA cements is that the produced concrete often achieves in 24 hours the compressive strengths that OPC reaches after 28 days strength in 24 hours. Rapid strength gain is critical for instance in situations where an airport runway, a bridge repair or a damaged freeway must be returned to service in a very short amount of time.

In view of all these possibilities and the widespread use of cement and concrete, the cement production is a very common step in many fields and is an important starting point to be optimized.

In fact, the main problem of the actual cement compositions production methods is the evolution of CO₂.

In fact, during its production, OPC is fired in kilns at temperatures of around 1500°C, whereas CSA only needs to be fired at temperatures of around 1250 °C. For every 1000 kg of OPC produced from limestone a resulting 579 kg of CO₂ gas is emitted solely from the chemical reaction, regardless of the process used or the fuel efficiency; in contrast, producing 1000 kg of CSA results in only 216 kg of CO₂, a reduction of about 62% relative to OPC.

Carbon dioxide (CO₂) is a huge environmental problem because it acts as a "greenhouse gas." Due to its molecular structure, CO₂ absorbs and emits infrared radiation, warming the Earth's surface and the lower levels of the atmosphere.

Creating a low-carbon economy is the main challenge of the future. The production of cement and concrete concentrates the greatest amount of CO₂ emissions (8%). The cement and the concrete supply chain faces an unavoidable challenge linked to the need to reduce CO₂ emissions by 2030. In Europe this reduction amounts to 50%.

If the maximum limits of CO₂ emissions would not be respected, heavy penalties will have to be paid, i.e., the so-called "carbon tax" (the expected level of which, by 2023, amounts to approximately € 100/ton of CO₂).

According to the GCCA (Global Association of Cement and Concrete producers) *"the drastic reduction of 50% of CO₂ by 2030 represents an epochal challenge that must be taken into account and won, focusing above all on innovation and technology".*

The June 2021 Meeting of the most industrialized countries (G20) in Naples identified technologies aimed at reducing CO₂ emissions as the highest priority to which to allocate a preponderant part of the investments in the coming years *"Investments in low-emission technologies are considered the highest priority* as *well* as *an opportunity for economic growth. Investments in R&D must be oriented towards a more sustainable energy mix, energy efficiency, eco-sustainable production models".*

Even Holcim and Vinci Construction, top producer of cementitious agglomerates and leading construction company, set as a key pillar towards net-zero ambition, the production with zero carbon footprint in concrete, demonstrating the huge effort that all the companies are doing, in view of the problems above reported.

Another huge environmental problem is the global water scarcity.

In fact, the United Nations World Report on the development of water resources 2020 launched as an alarm that the world could face a 40% global water shortage by 2030, due to global warming and increased consumption.

This must be considered when developing new production methods on global scale, which make use of large amounts of water, which needs to be reduced as much as possible, in order to achieve much more environmentally friendly processes for the production of primary and necessary goods. This also affects the production of cement and concrete, which normally require large amounts of water.

Taking into account these very important environmental problems, the research on improved cement and concrete compositions and formulations cannot be stopped, due to the high demand of construction materials all around the world.

The incorporation of graphene in cement and concrete, in addition to determining a strong improvement in mechanical, thermal, electrical, optical properties, etc. of cementitious composites, makes concrete about 40% more resistant than standard concrete. Hence, the technology of adding graphene into the cement and concrete has the potential to deliver stronger, less permeable concrete structures enabling a new generation of concrete designs.

This means that much less material is required to achieve equivalent structural performance.

The reduction of the quantity of cement needed for the formulation of concrete, in presence of a graphene additive, is evaluated to be 35% - 40%, and has an impact on the environment, in the sense that, since the production of cement produces a CO₂ release in the atmosphere, a reduced amount of cement to be added, means a reduction of CO₂ emissions as well.

The increased resistance of graphene concrete also reduces the need for steel reinforcements, further saving material and reducing installation times on site. The water saving is about 30%.

Nevertheless, it is known that adding graphene in cement has several disadvantages to be considered, while using it as additive.

Specifically, normally, due to the specific technical features of graphene, such its very low dispersibility in the cementitious matrix, it is very difficult to add graphene amounts higher than 0.5%.

Normally, with known cement and concrete compositions production processes, a very low concentration of graphene could be incorporated to the cement, specifically in a range of graphene concentration from 0.005 to 0.1%, in the cement employed. Furthermore, it was necessary to add said low concentration of graphene was added in the form of a slurry, hence with the presence of water, with the subsequent drawback of adding water into a cement composition.

This step not only leads to a cement containing high quantities of water, thus not taking into account the global water shortage, but also leads to known byproducts in the cementitious slurries, such as sulfites and chlorites. Moreover, in terms of production process, the presence of high quantities of water in the cementitious slurry leads to a further addition of an exsiccation step, thus implying more CO₂ emissions.

In view of the above-mentioned problems, it is still felt the need of new cement compositions to be used in concrete, and new production methods thereof, which allow to reduce the carbon dioxide emissions and water use, while remaining structurally equivalent in terms of mechanical properties and performances.

### SUMMARY OF THE INVENTION

The objects above are achieved according to the present invention with a graphenic preparation comprising:
- a filler selected from the group consisting of calcium carbonate, silica, kaolinite, and limestone.
- graphene, in an amount ranging from 0.1 to 10% by weight, with respect to amount of the graphenic preparation; and
- at least one cementitious additive, in an amount ranging from 3 to 40% by weight, with respect to amount of the graphenic preparation selected from the group consisting of a poly-alkyl naphthalene sulfonate, a phosphoric ester of polyoxyethylenated fatty alcohols, lignin sulfonate, sulphated melamine formaldehyde resin, sodium polycarboxylate, polyacrylate ammonium salt, a phosphoric ester and an alkoxylated phosphoric ester;
   wherein each of the above components is in solid-dry state.

In another aspect the invention relates to graphene-based cementitious composition comprising:
- a graphenic preparation of the invention in an amount ranging from 0.5 to 20% by weight, with respect to the amount of the total cementitious composition
- a cement;
wherein each of the above components is in solid-dry state.

In an advantageous embodiment the above components in solid-dry state are obtainable by a dry-milling step, singularly subjected or as final graphenic preparation.

The graphene-based cementitious composition of the invention in view of the graphenic preparation allows to reach improved performances, such as improved dispersibility, hence reducing the amount of water needed to disperse and obtain homogeneous cementitious compositions in the production of concretes, without the use of graphene slurry, hence having a complete dry solid state cementitious composition. This is possible in view of the specific components present in a solid state, and preferably due also to a specific dry-milling process for the production of said the graphene-based cementitious composition.

The invention also provides for a process for the production of the graphene-based cementitious composition according to the invention, comprising the steps of:
a) providing a graphenic preparation in an amount from 0.5 to 20% by weight with respect to the total amount of the graphene-based cementitious composition comprising:
   - a filler selected from the group consisting of calcium carbonate, silica, kaolinite and limestone;
   - graphene, in an amount ranging from 0.1 to 10% by weight, with respect to amount of the graphenic preparation; and
   - at least one cementitious additive, in an amount ranging from 3 to 40% by weight, with respect to amount of the graphenic preparation selected from the group consisting of a poly-alkyl naphthalene sulfonate, lignin sulphonate, a phosphoric ester of polyoxyethylenated fatty alcohols, sulphated melamine formaldehyde resin, sodium polycarboxylate, polyacrylate ammonium salt, a phosphoric ester and an alkoxylated phosphoric ester;
b) adding cement, thus obtaining a graphene-based cementitious composition. Adavantageously, the graphenic preparation of step a) is subjected a to dry-milling step before the addition of the cement.

In a preferred embodiment, also the cement is subjected to a dry-milling step before step b). In a more preferred embodiment, after step b), a step c) of dry-milling is provided.

In another aspect the invention thus provides for a graphene-based cementitious composition obtainable by the method above described.

Said graphene-based cementitious composition is further used to prepare a specific concrete. Hence the invention further relates to a graphene-based concrete formulation comprising:
- the graphene-based cementitious composition according to the invention in an amount ranging from 0.5 to 30% by weight with respect to the total concrete; and
- at least one additive component selected from the group consisting of sand, gravel, and hard rock, clay, and marl.

In order to prepare the final concrete graphene-based concrete formulation is added with water.

Said graphene-based concrete can be easily and fast prepared via a specific, advantageous and environmentally friendly process of preparation.

Hence, in a further aspect the invention provides for a process or the production of the graphene-based concrete according to the invention, comprising the steps of:
a) providing the graphene-based cementitious composition of the invention in an amount ranging 0.5% to 30% by weight with respect to the total concrete;
b) mixing said graphene-based cementitious composition of step a) to at least one additive component selected from the group consisting of sand, gravel, and hard rock, clay, and marl, thus obtaining a graphene-based concrete.

Preferably, in step b), water is added to the graphene-based cementitious composition of step a), together with the at least one additive component in order to obtain a concrete product. The amount of water is arranged by the skilled man in the art on the base of the cement present in the cementitious composition.

The process above described allows a very low logistic costs, since it does not imply the in-situ graphene-slurry transportation, but instead the graphene-based cement, in dry form, is easily transportable and afterwards very easily and fast mixed with water, directly in-situ, together with the further adhesives, necessary to obtain the graphene-based concrete of the invention. Furthermore, the present invention makes it possible to avoid one of the major problems of slurries, namely the sedimentation of graphene. The removal of this sedimentation is not an easy task and requires, among the other requirements, a suitable equipment.

In a further embodiment the invention provides for a process or the production of the graphene-based concrete formulation according to the invention, comprising the steps of:
a) providing the graphenic preparation of the invention;
b) adding a cement, thus obtaining a graphene-based cementitious composition;
c) mixing the said graphene-based cementitious composition with at least one additive component selected from the group consisting of sand, gravel, and hard rock, clay, marl, and water, thus obtaining a graphene-based concrete formulation. In order to prepare the final concrete, the graphene-based concrete formulation is added with water.

Hence in a further aspect, the present invention relates to a graphene-based concrete obtainable by the method herein described.

Lastly, the invention relates to a use of the graphene-based cementitious composition of the invention, to produce a graphene-based concrete.

The graphene-based concrete of the invention, due to its specific components, the presence of high amounts of homogeneously mixed graphene, the dry-milling step of production and the use of the specific cement composition of the invention, allows to reach remarkable mechanical properties, such as longer lifespan, improved frost resistance while reducing at the same time the necessary amount of water, hence the w/c ratio in the concrete up to 30% less than ordinary known concrete formulations.

### DESCRIPTION OF FIGURES

Fig. 1 shows the type of specimen used for the compression tests and the pressure applied to it according to example 4;
Fig 2. shows the type of specimen used for the flexibility tests and the force applied to it according to the example 6.

### DETAILED DESCRIPTION OF THE INVENTION

Unless otherwise specified, in the present invention:
- all percentages and ratios among components are by weight;
- "b.w." stands for "by weight";
- "w/c" stands for water/cement ratio;
- with the term "cement" it is intended to comprise calcium sulfoaluminate cement (CSA-cement), Portland cement;
- with the term "filler" or "filler additive" or "cementitious filler", it is intended a compound, which can be added into the composition of the invention, and allows to control and obtain the desired consistency, in terms of viscosity, depending on the final purpose of the composition and is selected from calcium carbonate, silica, kaolinite and limestone;
- with the term "binding agent" or "binder" or "cementitious binder" is intended for a compound, or a material used to form materials into a cohesive whole, as a means of providing structural stability. Binding agents harden chemically or mechanically, and in the process bond fibers, filler powder and other substances together. In the present invention, when added into the graphene-base cementitious composition, the term binding agents mainly refer to additives that have the following functions:
   a) wet the graphene in solid form, specifically in particles form; b) stabilize the graphene particles; and c) facilitate agglomeration as well as the incorporation of graphene particles into the filler;
- with the term "concrete", it is intended a cementitious composition comprising cement, and optional additives, such as for example binders; and
- with "dry-solid state" "all-solid-state", "dry anhydrous form" it is meant any composition comprising water in a concentration of at maximum of about 1%;

In a first aspect, the present invention relates to a graphenic preparation comprising:
- a filler selected from the group consisting of calcium carbonate, silica, kaolinite and limestone;
- graphene, in an amount ranging from 0.1 to 10% by weight, with respect to amount of the graphenic preparation; and
- at least one cementitious additive, in an amount ranging from 3 to 40% by weight, with respect to amount of the graphenic preparation selected from the group consisting of a poly-alkyl naphtalene sulfonate, lignin sulfonate, a phosphoric ester of polyoxyethylenated fatty alcohols, sulphated melamine formaldehyde resin, sodium polycarboxylate, polyacrylate ammonium salt, a phosphoric ester and an alkoxylated phosphoric ester,
wherein each of the above components is in solid-dry state.

In an advantageous ad preferred aspect, the graphenic preparation is subjected to a dry-milling step.

Advantageously, the graphenic preparation is ready-to use.

The graphenic preparation of the invention comprises graphene, in an amount ranging from 0.1 to 10% by weight, with respect to the total graphenic preparation. Preferably, the graphene is in an amount from 0.25 to 6%, more preferably from 0.4 to 3%, even more preferably is 2% by weight, with respect to the total graphenic preparation.

Advantageously, the graphene used in the graphene preparation as raw material is in the form of powder, particles, flakes, preferably in the form of powder or flakes or the graphene used in the graphene preparation as raw material, can be included in an aqueous dispersion or slurry. According to this embodiment, the final preparation should be subjected to a heating step at the temperature range from 100 to 150°C, preferably under nitrogen atmosphere.

The final graphenic preparation is, independently from the physical form of the graphene raw material used, an all-solid state graphenic preparation.

In one advantageous embodiment, when the graphene is in powder form, it has a mean particle size D50 in the range from 6 to 2 µm, preferably it has a mean particle size D50 of 4 µm.

The graphenic preparation comprises at least one cementitious additive selected from the group consisting of a poly-alkyl naphtalene sulfonate, lignin sulfonate, a phosphoric ester of polyoxyethylenated fatty alcohols, sulphated melamine formaldehyde resin, sodium polycarboxylate, polyacrylate ammonium salt, a phosphoric ester and an alkoxylated phosphoric ester. Preferably, the at least one cementitious additive is polynaphthalene sulfonate.

Said at least one cementitious additive is in an amount ranging from 2 to 40% by weight, with respect to the total graphenic preparation.

Said at least one cementitious additive allows, together with the other components of the graphene-based preparation, to reduce the water requirement up to 30%.

Advantageously, said at least one cementitious additive is in an amount from 3 to 35%, preferably from 3 to 33%, more preferably is from 4% to 20%, even more preferably is 16% by weight, with respect to the total graphenic preparation.

The graphenic preparation comprises at least one filler selected from the group consisting of calcium carbonate, silica, kaolinite, limestone. Preferably the filler is calcium carbonate.

Said at least one filler is preferably in an amount ranging from 50% to 98% by weight, with respect to the total graphenic preparation.

Preferably, the at least one filler is in an amount ranging from 55% to 97%, more preferably from 60% to 96%, even more preferably is 82% by weight, with respect to the total graphenic preparation.

In another advantageous and preferred embodiment of the invention, the graphenic preparation can comprise further additives, which can improve the water/cement ratio (w/c), have a good affinity with graphene, have a good affinity with cement (and concrete), facilitate the incorporation of graphene into the at least one filler and have high agglomerating capacity. For example, said additives can be binders. Preferably, said at least one further additive is selected from the group consisting of sodium poly-naftyl-methane-sulfonate, lignin sulfonate, modified acrylic copolymer, sodium polycarboxylate, oxirane, 2-methyl-, oxirane polymer, mono-butyl ether phosphate, acrylic copolymer sodium salt, phosphoric ester-based polymer; medium chain sodium polyphosphate (CAS-Number: 68915-31-1), sodium salt of a low molecular weight polyacrylic acid in aqueous solution, 5-Chlor-2-methyl-2H-isothiazol-3-on, 2-Methyl-2H-isothiazol-3 -on, 1,2-Benzisothiazol-3 (2H) -on, acrylic copolymer/ acrylic vinyl, phosphoric acid ester.

In one advantageous embodiment, when the graphene, used as raw material in the graphenic preparation, is in powder form, the graphenic preparation has an average particle diameter in the range from 10 to 200 µm, preferably in the range from 20 to 40 µm.

The average particle size diameter of the graphenic preparation in powder free-flow form has been measured by Digital Electromagnetic Sieve Shaker from Filtra Vibration model FTL 0200.

The invention further relates to a process for preparing a graphenic preparation comprising the step of mixing graphene in an amount from 0.1 to 10% by weight with respect to the total amount of the graphenic preparation, a filler selected from the group consisting of calcium carbonate, silica, kaolinite and limestone, and a at least one cementitious additive according to the invention. Preferably the step of mixing is followed by a step of dry-milling.

This step of dry-milling allows the graphenic preparation of the invention to be in a completely dry-solid state, even in the case that the graphene used as raw material for the graphenic preparation is in the form of an aqueous dispersion, hence a slurry. In this case the final preparation should be preferably subjected to a heating step at the temperature range from 100 to 150°C, more preferably under nitrogen atmosphere.

The final graphenic preparation is, independently from the physical form of the graphene raw material used, an all-solid state graphenic preparation.

Preferably, the process for the production of the graphenic preparation comprises a further step of discharging the dry-milled graphenic into a cooler, thus obtaining a cooled dry-milled graphenic preparation.

Advantageously, the process for the production of the graphenic preparation e-comprises a further step of filtering the cooled dry-milled graphenic preparation in order to have a cooled dry-milled graphenic preparation with a controlled average size.

In an embodiment, the dry-milling step has preferably a total duration ranging from 10 to 20 min, more preferably 10 min.

Advantageously, the dry-milling step is preferably carried out at a controlled temperature, ranging from 30 to 130°C, more preferably about 40°C.

Again preferably, the dry-milling step occurs at a controlled rate, specifically with an average peripheral rate ranging from 5 to 30 m/s.

In an advantageous and preferred embodiment of the invention, the process takes place in an apparatus comprising from 3 to 7 rotors, preferably 4, which allow a continuous intermitting step of mixing and dry-milling.

More preferably, the apparatus employed for the process of the invention is a dry - mill + cooler apparatus, able at the same time to cool down after milling the solid compounds

Advantageously, the dry-mill + cooler apparatus is composed by: - a hollow body having at least one inlet and one outlet opening, - a heating / cooling jacket, - a shaft on which at least 2 impellers are mounted, - a cooling chamber, which is an external hollow body, placed outside the apparatus, equipped with an auger or impellers mounted on a shaft, and has an approximately double capacity with respect to the dry-mill + cooler apparatus.

The geometry and configurations of the impellers have the scope of achieving the fluid dynamic regime necessary for on one hand the dispersion of fine particles by means of kinetic and collision effects (number of impacts) and on the other hand the incorporation of graphene in the filler.

The plant/apparatus used (Dry Mill + Cooler) for the production of the graphenic preparation of the invention and the graphene-based cement of the invention, combines the several important functions, such as intimate mixing, dispersing, agglomerating all the components in the mixture and, at the same time, incorporating the graphene in the filler and, subsequently in the mixture.

These are consecutive phases carried out in a single device and are managed by an "intelligent" control system.

This apparatus and related process happening therein, comprising the specific step of dry-milling, allow on one hand the production process of both the graphemic preparation and the graphene-based cement to be completely automated, and on the other hand the production of agglomerates of fine solid components, such as graphene, in completely dry state, hence in the absence of solvents to evaporate, with subsequent significant energy savings in the granulation process.

In another aspect the invention relates to graphene-based cementitious composition comprising:
- a graphenic preparation of the invention in an amount ranging from 0.5 to 20% by weight, with respect to the amount of the total cementitious composition; and
- a cement,
wherein each of the above components is in solid-dry state.

In an advantageous embodiment the above components in solid-dry state are obtainable by a dry-milling step, singularly subjected or as final graphenic preparation.

The graphene-based cementitious composition of the invention, in view of the graphenic preparation, allows to reach improved performances, such as + 40% compressive strength, further reducing the amount of water needed to disperse and obtain homogeneous cementitious compositions in the production of concretes, without the use of graphene slurry, hence having a complete dry solid state cementitious composition. This is possible in view of the specific components present in a solid state, and preferably due also to a specific dry-milling process for the production of said the graphene-based cementitious composition.

As mentioned in the state of the art, the main problem of obtaining a graphene-based cementitious compositions as such, or to be incorporated in concrete, is the poor affinity of graphene for the rest of the components, necessary to obtain a homogeneous dispersion of the latter in the cementitious matrix and thus to have a well working cementitious composition and hence a well working concrete and hence.

In fact, according to the prior art, to be able to have a homogeneous and well working composition, graphene needs to be mixed with water, in order to obtain a homogeneous dispersion.

The necessary addition of water in the graphene-based cementitious compositions of the prior art leads necessarily to the above explained drawbacks, such as the huge problem of global water shortage, but also the known byproducts developed in cementitious slurries, such as sulfites and chlorites, in terms of production process, the further addition of an exsiccation step, thus implying more CO₂ emissions.

Without being bound to any theory, the inventors have surprisingly noticed that, via specific addition of the at least one cementitious additive to graphene in solid form or, even in the form of an aqueous dispersion or a slurry, they could obtain a graphenic preparation, in a totally dry solid form/state.

Afterwards, by adding said graphenic preparation comprising graphene and the at least one further cementitious additive, to cement, they could obtain an all-solid-state graphene-based cementitious composition, in a completely dry anhydrous form.

The total absence of water in the graphenic preparation, allows the resulting preparation, when subsequently added to cement, to form the graphene-based cementitious composition, which brings the following advantages with respect to known cementitious compositions: i) prevent the formation of sulphites and chlorites by-products, ii) increase the performances of the resulting cementitious composition and iii) avoid the further step of removal of water, or exsiccation, from the final composition, which implicated the emission of further CO₂.

The invention also provides for a process for the production of the graphene-based cementitious composition according to the invention, comprising the steps of:
a) providing a graphenic preparation in an amount from 0.5 to 30% by weight, with respect to the total amount of the graphene-based cementitious composition, comprising:
   - a filler selected from the group consisting of calcium carbonate, silica, kaolinite and limestone;
   - graphene, in an amount ranging from 0.1 to 10% by weight, with respect to amount of the graphenic preparation; and
   - at least one cementitious additive, in an amount ranging from 2 to 40% by weight, with respect to amount of the graphenic preparation selected from the group consisting of a poly-alkyl naphthalene sulfonate, lignin sulphonate, a phosphoric ester of polyoxyethylenated fatty alcohols, sulphated melamine formaldehyde resin, sodium polycarboxylate, polyacrylate ammonium salt, a phosphoric ester and an alkoxylated phosphoric ester; and
b) adding cement, thus obtaining a graphene-based cementitious composition.

Advantageously and preferably, the graphenic preparation of step a) is subjected a to dry-milling step before the addition of the cement.

In a preferred embodiment, also the cement is subjected to a dry-milling step before step b). In a more preferred embodiment, after step b), a step c) of dry-milling is provided.

In another aspect, the invention thus provides for a graphene-based cementitious composition obtainable by the method above described.

The process for the production of graphene-based cementitious composition comprises a step a) of providing a graphenic preparation according to the invention. In a further embodiment the graphenic preparation can be prepared in-situ in step a).

Therefore, before step a) there is a previous step of production of the graphenic preparation according to the invention. In this case, the graphene can be added in the form of powders, flakes or a water dispersion or a slurry.

According to this latter embodiment the provided graphenic preparation preferably should be subjected to a heating step at the temperature range from 100 to 150°C, preferably under nitrogen atmosphere before the insertion in step a).

The final graphenic preparation of step a) is, independently from the physical form of the graphene raw material used, an all-solid state graphenic preparation before being added with cement in step b).

Said step a) provides a graphenic preparation in an amount ranging from 0.5 to 30% by weight, with respect to the total graphenic preparation.

Preferably, the graphenic preparation of step a) is provided in an amount ranging from 1 to 15%, more preferably 1.2 to 12.5%, even more preferably is 10% by weight, with respect to the total graphenic preparation.

The process for the production of graphene-based cement comprises a step b) of adding cement.

Said step b) provides cement preferably in an amount ranging from 60 to 90% by weight with respect to the total graphene-based cementitious composition.

More preferably, the cement of step b) is provided in an amount ranging from 75 to 85% weight with respect to the total graphene-based cementitious composition. Said process allowed, as will be evident from the following experimental part, to drastically reduce the CO₂ emission, up to 40% during the process for manufacturing the graphene-based cement.

At the same time, due to the use of suitable additives such as a poly-alkyl naphtalene sulfonate, lignin sulfonate, and a specific dry-milling and cooling step in the preparation of the graphenic preparation, it allowed, on one hand to drastically reduce even the addition of water up to 30% and, on the other hand, to avoid heat dispersion.

In one embodiment of the invention, the graphene-based cementitious composition of step b) is in the form of powder-free flow.

In another embodiment of the invention, the graphene-based cementitious composition of step b) is in the form of powder free flow, dust-free granules. In both cases, the process of the invention is dust-free, hence, also in this respect, environmentally friendly.

Since all the components of the graphene-based cementitious composition are in solid state, this allows the process for the production of the graphene-based cementitious composition to be completely dry and controlled in terms of quantity measurements, which become easy and fast to perform.

Furthermore, the graphene results to be very homogeneously dispersed in dry state in the graphene-based cementitious composition of the invention, when mixed to the cement, thus allowing to add a higher amount of graphene in the final cement, with respect to the known cement compositions.

Hence in a further aspect, the present invention relates to a graphene-based cementitious composition obtainable by the method herein described.

The graphene-based cementitious composition of the invention, and its production process thereof, allow to reduce the CO₂ emissions, and to obtain improved w/c ratios, thus reducing the amount of water needed, while remaining structurally equivalent in terms of mechanical properties and performances.

The above-described graphene-based cementitious composition is used, to produce a graphene-based concrete.

Hence the invention further relates to a graphene-based concrete formulation comprising:
- the graphene-based cementitious composition according to the invention in an amount ranging from 0.5 to 30% by weight with respect to the total concrete; and
- at least one additive component selected from the group consisting of sand, gravel, and hard rock, clay, and marl.

In order to prepare the final concrete graphene-based concrete formulation is added with water. The amount of water is determined by the amount of cement present in the cementitious composition.

Said graphene-based concrete can be easily and fast prepared via a specific, advantageous and environmentally friendly process of preparation.

Hence, in a further aspect the invention provides for a process or the production of the graphene-based concrete according to the invention, comprising the steps of:
a) providing the graphene-based cementitious composition of the invention in an amount ranging 0.5 to 30% by weight with respect to the total concrete;
b) mixing said graphene-based cementitious composition of step a) to at least one additive component selected from the group consisting of sand, gravel, and hard rock, clay, and marl, thus obtaining a graphene-based concrete formulation.

Preferably, in step b), water is added to the graphene-based cementitious composition of step a), together with the at least one additive component. The amount of water is determined by the amount of cement present in the cementitious composition.

The graphene-based concrete of the invention comprises the graphene-based cementitious composition of the invention, in an amount ranging from 0.5 to 30% by weight, with respect to the total concrete formulation.

Preferably, the graphene-based concrete formulation of the invention comprises the graphene-based cementitious composition of the invention in a range from 2.5% to 15%, more preferably from 5% to 12.5%, even more preferably the graphene-based cementitious composition in the concrete is 10% by weight with respect to the total concrete.

In another aspect the invention relates to a graphene-based concrete formulation comprising:
- the graphenic preparation according to the invention;
- cement; and
- at least one additive component selected from the group consisting of sand, gravel, and hard rock, clay, and marl.

In order to prepare the final concrete graphene-based concrete formulation is added with water. The amount of water is determined by the amount of cement present in the cementitious composition.

The invention hence relates also a graphene-based concrete obtainable by using the graphenic preparation of the invention.

In another aspect, the invention relates to the use of the graphenic preparation of the invention or the graphene-based cementitious composition of the invention to produce a graphene-based concrete.

The graphene-based concrete of the invention has a water cement (W/C) ratio W/C ratio, according to UNIEN 480-1, in the range from 0.4 and 0.6.

The graphene-based concrete of the invention has a compression resistance, according to UNIEN12390-3, in the range from 30 to 60 N/mm².

The graphene-based concrete of the invention has an indirect tensile strength, according to UNIEN12390-6, in the range from 2.5 to 4 N/mm².

The graphene-based concrete of the invention has a flexural modulus, according to UNIEN12390-5, in the range from 4 to 7 N/mm².

The process above described allows a very low logistic costs, since it does not imply the in-situ graphene-slurry transportation, but instead the graphene-based cement, in dry form, is easily transportable and afterwards very easily and fast mixed with water, directly in-situ, together with the further ingredients, necessary to obtain the graphene-based concrete of the invention.

Hence in a further aspect, the present invention relates to a graphene-based concrete obtainable by the method herein described and a graphene-based concrete obtainable by using the graphene-based cementious composition of the invention.

The graphene-based concrete of the invention, due to its specific components, the presence of high amounts of homogeneously mixed graphene, the dry-milling step of production and the use of the specific cement composition of the invention, allows to reach remarkable mechanical properties, such as longer lifespan, higher compression resistance up to 40% more, with respect to known cements, improved frost resistance while reducing at the same time the necessary amount of water, hence the w/c ratio in the concrete up to 30% less than ordinary known concrete formulations, as will be evident from the following experimental part.

### EXPERIMENTAL PART

### Materials, methods, and instruments

The dry - mill + cooler apparatus used in the present invention is a Dry Mill + Cooler of the model DMP 13 of 13 Liters from the brand Plasmec.

All the tests relating to the cementitious compositions and concrete performances were carried out by the Tecno Piemonte company.

The base material for the graphene-based concrete of the invention, tech ALI CEM GREEN, is a CSA cement produced and sold by the present Applicant; the filler is a limestone filler coming from Cremaschi quarry; the water reducing NOWA 130 agent is a solid super-fluidifying additive based on poly-alkyl naphtalene sulfonate or lignin sulfonate.

### Example 1 - Production of a graphenic preparation of the invention

50 gr of graphene in powder form was added to 4750 gr of calcium carbonate and 200 gr of Surfaron A 1561 N 100 (Protex), and a final batch of 5000 gr of graphene-based cementious composition, called CP 801.

The following concentration of each component were obtained:
- 1% of graphene in powder form,
- 95% of calcium carbonate, and
- 4% of Surfaron^{®} A 1561 N100 (Protex), that is Poly-alkyl Naphthalene Sulfonate with respect to 100 gr of the final graphene-based preparation.

Each of the components was dry-milled and cooled in the dry - mill + cooler apparatus.

The final Product Shape of the graphene-preparation was Powder Free Flow with a granulometry of 20-50 µm.

The following operative conditions for the dry-milling were set for the above-mentioned apparatus:
- Peripheric rate: 20 m/s;
- Power absorbance: 8 A;
- Temperature: 40°; and
- Time: 8 minutes.

The same procedure was applied for other preparations of the invention and the following graphene-preparation were obtained:

**Table 1**

| **Graphenic preparation** | **Graphene (powder form)** | **Filler CaCO₃** | **Cementious additive Surfaron** |
|---|---|---|---|
| **CP803** | 0.5% | 95.5% | 4% |
| **CP803/1** | 2% | 82% | 16% |
| **CP803/2** | 4% | 64% | 32% |
| **CP801** | 1% | 95% | 4% |

The following operative conditions for the dry-milling were set for the above-mentioned apparatus and reported in the following table:

**Table 2**

| **Graphenic preparation** | **Peripheric rate (m/s)** | **Power absorbance (A)** | **Temperature (°)** | **Time (min)** | **Grammage (µm)** |
|---|---|---|---|---|---|
| **CP803** | 30 | 9 | 50 | 10 | 40-50 µm |
| **CP803/1** | 25 | 8 | 45 | 10 | 40-50 µm |
| **CP803/2** | 20 | 7 | 40 | 8 | 40-50 µm |
| **CP801** | 20 | 8 | 40 | 8 | 20-50 µm |

A graphenic preparation having graphene in the form of a slurry instead of a powder, was also prepared as follows:
50 gr of graphene in slurry, having a graphene concentration of 9%, form was added to 4750 gr of calcium carbonate and 200 gr of Surfaron A 1561 N 100 (Protex), and a final batch of 5000 gr of graphene-based cementious composition, called comparative graphene-based preparation (according to UNI EN 480-1).

The following concentration of each component were obtained:
- 1% of graphene in slurry form or aqueous dispersion, (having a concentration of graphene in powder form of 9% in water, with respect to the total amount of the aqueous dispersion);
- 95%% of calcium carbonate, and
- 4% of Surfaron^{®} A 1561 N100 (Protex), that is poly-alkyl naphtalene sulfonate;
with respect to the final graphene-based preparation.

In this case the preparation was subjected to a heating step at 130°C under nitrogen atmosphere.

Each of the components was dry-milled and cooled in the dry - mill + cooler apparatus.

The final Product Shape of the graphene-preparation was powder-free Flow with a granulometry of 50-60 µm.

The following operative conditions for the dry-milling were set for the above-mentioned apparatus:
- Peripheric rate: 35 m/s;
- Power absorbance: 10 A;
- Temperature: 110°; and
- Time: 10 minutes.

Each of the components was dry-milled and cooled in the dry - mill + cooler apparatus.

### Example 2 - Production of a graphene-based concrete of the invention

Several concentrations of the graphenic preparations of Example 1, CSA cement and the further additive, namely sand, gravel, and hard rock, clay, and marl, were used to prepare samples of concrete according to the invention.

Each of the components of the concrete were dry-milled and cooled in the dry - mill + cooler apparatus.

The final grammage of the graphene-based concrete was < 40 µm.

The following operative conditions for the dry-milling were set for the above-mentioned apparatus:
- Peripheric rate: 20 m/s;
- Power absorbance: 8 A;
- Temperature: 40°; and
- Time: 8 minutes

The following concretes have been produced and reported in Table 3.

**Table 3**

| **Graphene-based concrete** | **Graphenic preparation (with respect to the total amount of final concrete)** |
|---|---|
| **WAYG-CP803** | 10% |
| **WAYG-CP803** | 6% |
| **WAYG-CP803/1** | 2.5% |
| **WAYG-CP803/2** | 1.25% |
| **WAYG-801** | 10% |

### Example 3 - Effect of the concentration the graphenic preparations of the invention in the graphene-based concrete of the invention, according to UNIEN934-2

The graphene preparations of the invention, obtained according to Example 1, were then used to produce, according to Example 2, the graphene-based concrete of the invention. The fluidifying effect of several concentrations of the graphenic preparations of the invention in the final concretes, with respect to the amount of water in the graphene-based concrete of the invention, was tested (slump test). The W/C ratio (water/cement) of each graphene-based concrete of the invention of Example 2 was also calculated after the concretes of the invention have been subjected to the water saving tests.

The following comparative samples were prepared:
*The reference concrete A1* was a preparation without the graphenic preparation of the invention.

*Reference concrete B1* was the reference concrete A wherein the graphene was added in the form of slurry according to the prior art. The amount of graphene in the aqueous dispersion to be added to the concrete formulation was 9% with respect to the total weight of the aqueous dispersion.

The volumetric mass of fresh concrete and the air content was also checked, with test conditions according to UNIEN 12350-6 and UNIEN 12350-7 respectively. The results are shown in Table 4.

**Table 4**

| **Concrete** | **Graphenic preparations Concentration (with respect to the total amount of final concrete)** | **Slump test (mm) according to UNIEN 12350-2** | **Volumetric mass of the fresh concrete (kg/m³) according to UNIEN 12350-6** | **Air content in the fresh concrete (%) according to UNIEN 12350-7** | **W/C ratio According to UNIEN 480-1** |
|---|---|---|---|---|---|
| ***Reference concrete A1*** | - | 70 | 2382 | 1.7 | 0.532 |
| ***Reference concrete A1*** | - | 70 | 2395 | 1.7 | 0.532 |
| ***Reference concrete B1*** | 10% | 60 | 2364 | 1.8 | 0.532 |
| **WAYG-CP803** | 10% | 70 | 2403 | 1.1 | 0.424 |
| **WAYG-CP803** | 10% | 70 | 2405 | 1.7 | 0.424 |
| **WAYG-CP803** | 6% | 70 | 2404 | 1.3 | 0.424 |
| **WAYG-CP803** | 6% | 70 | 2404 | 1.3 | 0.466 |
| **WAYG-CP803/1** | 2.5% | 70 | 2390 | 1.6 | 0.381 |
| **WAYG-CP803/2** | 1.25% | 60 | 2437 | 1.7 | 0.413 |

It was possible to observe that, with respect to the reference concrete A1 and the reference concrete B1, all the different graphene-based concretes shown in Table 4, each comprising a different amount of graphenic preparation of the invention, show a lower water/cement ratio, necessary to achieve the final concrete formulation. Hence, this demonstrates the environmental improvement of the composition and the concrete of the invention in reducing the water content necessary to achieve a valid final product.

Based on the W/C ratio, it was possible to define that:
- for concrete WAYG-CP803: -20% of water used; and
- for concrete WAYG-CP803/1: -29% of water used.

All these percentages are calculated with respect to the amount used in reference concrete A1, thus demonstrating the remarkable water saving, due to the graphemic preparations of the invention and their production method (dry-milling process). Furthermore, the samples of the invention, i.e. concretes produced with the graphenic preparation showed very satisfying mechanical properties, as will be shown in the following examples.

### Example 4 - Compression resistance tests, according to UNIEN12390-2/3

It has been prepared a first series of several specimens having a specific size 150 x 150 x 600 mm. All specimens were produced with the graphene-based concrete of the invention according to Example 2, and each specimen was aged according to UNIEN12390-2.

The test was carried out in comparison with the following concrete comparison samples according to the prior art:
*The reference concrete A (1 and 2)* was a mixture without the graphenic preparation of the invention.

*Reference concrete B1* was the reference concrete A wherein the graphene was added in the form of paste having an amount of 28% of graphene to the concrete formulation.

The compression resistance of the samples was measured according to UNI EN 12390-2/3.

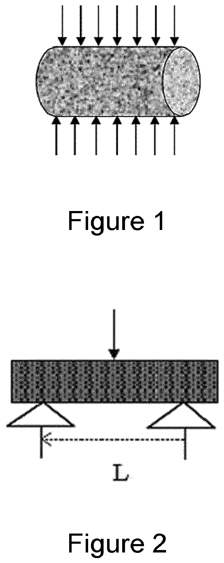

In Fig. 1 is shown the shape and the type of pressure to which the specimens are subjected in the compression tests.

In the following table with: - "S" is indicated a satisfying type of fracture, hence a truncated pyramid-shaped type of fracture and - "**NS**" is indicated a non-satisfying type of fracture, hence a shear type of fracture. The results are shown in Table 5.

**Table 5**

| **concrete** | **Graphenic preparations Concentration (with respect to the total amount of final concrete)** | **Volumetric mass of the fresh concrete (kg/m³) according to UNIEN 12350-6** | **Aging time** | **Compression resistance (N/mm²)** | **Fracture type (x)** |
|---|---|---|---|---|---|
| **Reference concrete A1** | - | 2382 | 28 days | 43.5 | S |
| **Reference concrete A2** | - | 2395 | 28 days | 47.6 | S |
| **Reference concrete B1** | 10% | 2375 | 28 days | 47.4 | S |
| **WAYG-CP803** | 10% | 2403 | 28 days | 59.5 | **S** |
| **WAYG-CP803** | 10% | 2405 | 28 days | 60.9 | **S** |
| **WAYG-CP803** | 6% | 2400 | 28 days | 52.2 | **S** |
| **WAYG-CP803** | 6% | 2401 | 28 days | 51.8 | **S** |
| **WAYG-CP803/1** | 2.5% | 2397 | 28 days | 62.9 | **S** |
| **WAYG-CP803/1** | 2.5% | 2408 | 28 days | 62.4 | **S** |
| **WAYG-CP803/2** | 1.25% | 2435 | 28 days | 49.3 | **S** |
| **WAYG-CP803/2** | 1.25% | 2435 | 28 days | 49.3 | **S** |

Table 5 shows that all the specimens of the graphene-based concrete of the invention tested showed satisfying type of fracture, hence a truncated pyramid-shaped type of fracture.

Furthermore, it has been verified that, by adding to the cement, the graphenic preparation in solid state, hence completely dry, instead of a known graphene-based slurry or paste, the compression resistance of the final graphene-based concrete was improved, hence the values in N/mm² shown in Table 5 resulted in an increase. Table 5 shows hence a trend of increase in mechanical resistance to compression, with the increase of graphenic preparations added to the cement, specifically from 1.25 to 10% with respect to the total amount of concrete.

Thus, the graphene-based concrete of the invention has higher compressive strength, when compared to reference known concretes A1, A2 and, even when compared to reference graphene paste-based concrete B1, thus demonstrating the importance of the use in concretes of the graphenic preparation in dry solid state of the invention. This enhances the architectural possibilities, since it is a stronger concrete and hence concrete with a longer life span, requiring less maintenance.

### Example 5 - Determination of the water penetration under pression in the concrete of the invention, according to UNIEN12390-8

It has been prepared a first series of several specimens having a specific size 150 × 150 × 600 mm. All specimens were produced with the graphene-based concrete of the invention according to Example 2, and each specimen was aged according to UNIEN12390-2.

The test was carried out in comparison with the following concrete comparison samples according to the prior art:
*The reference concrete A1* was a mixture without the graphenic preparation of the invention.

*Reference concrete B1 and B2* were the reference concrete A1 wherein the graphene was added in the form of slurry (9% of graphene in aqueous dispersion) and in the form of paste (28% of graphene in aqueous dispersion), respectively. Specimens have been subjected to a water pressure of 500kPa for 72h, with the direction of the waterjet perpendicular to the specimen.

At the end of the test the specimen was subjected to diametrical breaking (direct traction) and the depth of water penetration was measured on the pieces, according to UNI EN 12390-8.

The results are shown in Table 6.

**Table 6**

| **concrete** | **Graphenic preparation (with respect to the total amount of final concrete)** | **Applied water pressure (kPa)** | **Aging time** | **Applied pressure time** | **Maximum water penetration (mm)** |
|---|---|---|---|---|---|
| **Reference concrete A 1** | - | 500 | 28 days | 72±2 | 25 |
| **Reference concrete B 1** | 10% | 500 | 28 days | 72±2 | 43 |
| **Reference concrete B 2** | 10% | 500 | 28 days | 72±2 | 30 |
| **WAYG-CP803** | 10% | 500 | 28 days | 72±2 | 19 |
| **WAYG-CP803** | 10% | 500 | 28 days | 72±2 | 19 |
| **WAYG-CP803** | 10% | 500 | 28 days | 72±2 | 21 |
| **WAYG-CP803** | 6% | 500 | 28 days | 72±2 | 20 |
| **WAYG-CP803** | 6% | 500 | 28 days | 72±2 | 20 |
| **WAYG-CP803** | 6% | 500 | 28 days | 72±2 | 19 |
| **WAYG-CP803/1** | 2.5% | 500 | 28 days | 72±2 | 18 |
| **WAYG-CP803/1** | 2.5% | 500 | 28 days | 72±2 | 16 |
| **WAYG-CP803/1** | 2.5% | 500 | 28 days | 72±2 | 16 |
| **WAYG-CP803/2** | 1.25% | 500 | 28 days | 72±2 | 23 |
| **WAYG-CP803/2** | 1.25% | 500 | 28 days | 72±2 | 23 |
| **WAYG-CP803/2** | 1.25% | 500 | 28 days | 72±2 | 25 |

Table 6 shows that all the specimens of the graphene-based concrete of the invention tested showed satisfying maximum water penetration.

Furthermore, it has been verified that the concrete produced by using the graphenic preparation in solid state, hence completely dry, instead of concrete without graphene (A1) or a concrete produced with a known graphene-based slurry (B1) or known graphene-based paste (B2), the water resistance of the final concrete sample improves.

Table 6 shows hence a trend of decrease in the maximum water penetration.

This effect also enhances the frost resistance of the concretes of the invention, since the presence of graphene comprised in the graphene-based concretes of the invention allows the migration of water droplets in the nano-pores of the graphene-based cementitious composition and so even better with respect to the reference concrete B1 and B2.

### Example 6 - Determination of the flexibility of the concrete of the invention, according to UNIEN12390-5

It has been prepared a first series of several specimens having a specific size 150 x 150 x 600 mm. All specimens were produced with the graphene-based concrete of the invention according to Example 2, and each specimen was aged according to UNIEN12390-2.

The test was carried out in comparison with the following concrete comparison samples according to the prior art:
*The reference concrete A1* was a mixture without the graphenic preparation of the invention.

*Reference concrete B1* was the reference concrete A1 wherein the graphene was added in the form of paste (28% of graphene in aqueous dispersion).

The flexibility test was performed on the specimens, specifically where the distance between the two supports was 450 mm, and the flexibility modulus was measured according to UNI EN 12390-5.

Fig 2. shows the type of specimen used for the flexibility tests and the direction of the force/load applied to it, wherein L is the distance between the two supports.

The results are shown in Table 7.

**Table 7**

| **concrete** | **Graphenic preparation (with respect to the total amount of final concrete)** | **Flexibility or flexural modulus *f_{cf}* (N/mm²)** | **Aging time** |
|---|---|---|---|
| **Reference concrete A 1** | - | 5.3 | 28 days |
| **Reference concrete B 1** | 10% | 5.0 | 28 days |
| **WAYG-CP803** | 10% | 5.4 | 28 days |
| **WAYG-CP803** | 10% | 5.4 | 28 days |
| **WAYG-CP803** | 6% | 5.2 | 28 days |
| **WAYG-CP803** | 6% | 5.5 | 28 days |
| **WAYG-CP803** | 6% | 6.0 | 28 days |
| **WAYG-CP803/1** | 2.5% | 5.7 | 28 days |
| **WAYG-CP803/1** | 2.5% | 5.5 | 28 days |
| **WAYG-CP803/1** | 2.5% | 5.5 | 28 days |

Table 7 shows that all the specimens of the graphene-based concrete of the invention tested showed satisfying flexibility, higher that the reference known concretes.

Furthermore, it has been verified that the concrete produced by using the graphenic preparation in solid state, hence completely dry, instead of concrete without graphene (A1) or a concrete produced with known graphene-based paste (B1), the flexibility of the final graphene-based concrete was improved.

Table 7 shows hence a trend of increase in mechanical flexibility, with the increase of graphenic preparation added to the concrete paste base, when compared to reference known concrete and even when compared to reference graphene paste-based concrete, thus demonstrating the importance of the use in concretes of the graphenic preparation in dry solid state. This enhances the architectural possibilities, since it is a flexible and tunable concrete, which can be used in different structures.

### Example 7- Determination of the indirect tensile strength of the concrete of the invention, according to UNIEN12390-6

It has been prepared a first series of several specimens having a cylindric shape, with a length of 300mm and a diameter of 150 mm.

All specimens were produced with the graphene-based concrete of the invention according to Example 2, and each specimen was aged according to UNIEN12390-2.

The test was carried out in comparison with the following concrete comparison samples according to the prior art:
*The reference concrete A1* was the preparation without the graphenic preparation of the invention.

*Reference concrete B1 and B2* were the reference concrete A1 wherein the graphene was added in the form of paste (28% of graphene in aqueous dispersion). Samples were treated according to UNI EN12390-6 and the resulting indirect tensile strength was measured.

The results are shown in Table 8.

**Table 8**

| **concrete** | **Graphenic preparation (amount with respect to the total amount of final concrete)** | **Theoretical fracture area (mm²)** | **Aging time** | **Tensile strength (Rₜ = N/mm²)** |
|---|---|---|---|---|
| **Reference concrete A 1** | - | 45000 | 28 days | 3.30 |
| **Reference concrete B 1** | 10% | 45000 | 28 days | 3.28 |
| **Reference concrete B 2** | 10% | 45000 | 28 days | 2.66 |
| **WAYG-CP803** | 10% | 45000 | 28 days | 3.71 |
| **WAYG-CP803** | 10% | 45000 | 28 days | 3.78 |
| **WAYG-CP803** | 6% | 45000 | 28 days | 3.75 |
| **WAYG-CP803/1** | 2.5% | 45000 | 28 days | 4.47 |
| **WAYG-CP803/1** | 2.5% | 45000 | 28 days | 3.72 |
| **WAYG-CP803/1** | 2.5% | 45000 | 28 days | 3.54 |

Table 8 shows that all the specimens of the graphene-based concrete of the invention tested showed satisfying Tensile strength (Rt = N/mm²).

Furthermore, it has been verified that the concrete produced by using the graphenic preparation in solid state, hence completely dry, instead of concrete without graphene (A1) or a concrete produced with known graphene-based paste (B1 and B2), the compression resistance of the final graphene-based concrete was improved. This enhances the architectural possibilities, since it is a stronger concrete and hence concrete with a longer life span, requiring less maintenance.

## Claims

1. A graphenic preparation comprising:
- a filler selected from the group consisting of calcium carbonate, silica, kaolinite and limestone.
- graphene, in an amount ranging from 0.1 to 10% by weight, with respect to amount of the graphenic preparation; and
- at least one cementious additive, in an amount ranging from 3 to 40% by weight, with respect to amount of the graphenic preparation selected from the group consisting of poly-alkyl naphtalene sulfonate, a phosphoric ester of polyoxyethylenated fatty alcohols, lignin sulfonate, sulphated melamine formaldehyde resin, sodium polycarboxylate, polyacrylate ammonium salt, a phosphoric ester and an alkoxylated phosphoric ester;
wherein each of the above components is in solid-dry state.

2. The graphenic preparation of claim 1, wherein the graphenic preparation is a dry-milled preparation.

3. The graphenic preparation of claim 1 or claim 2, wherein graphene is in an amount from 0.25 to 6%, preferably from 0.4 to 4%, more preferably is 2% by weight, with respect to the total graphenic preparation.

4. The graphenic preparation of anyone of claims 1-3, wherein the graphene is in the form of powder, particles, flakes or the graphene is in aqueous dispersion or slurry.

5. The graphenic preparation of anyone of claims 1-4, wherein the at least one cementitious additive is a poly-alkyl naphtalene sulfonate or lignin sulphonate.

6. The graphenic preparation of anyone of claims 1-5, wherein the at least one cementitious additive is in an amount ranging from 2 to 40%, preferably from 3 to 33%, more preferably is 4 to 20%, even more preferably is 16% by weight, with respect to the total graphenic preparation.

7. The graphenic preparation of anyone of claims 1-6, wherein the filler is calcium carbonate.

8. The graphenic preparation of anyone of claims 1-7, wherein the at least one filler is in an amount ranging from 50% to 98% by weight, preferably, in an amount ranging from 55% to 97%, more preferably from 60% to 96%, even more preferably is 82% by weight, with respect to the total graphenic preparation.

9. A process for preparing a graphenic preparation according to anyone of claims 1-8, comprising the step of mixing graphene in an amount from 0.1 to 10% by weight with respect to the total amount of the graphenic preparation, a filler selected from the group consisting of calcium carbonate, silica, kaolinite and limestone, and at least one cementitious additive selected from the group consisting of poly-alkyl naphtalene sulfonate, lignin sulfonate, a phosphoric ester of polyoxyethylenated fatty alcohols, sulphated melamine formaldehyde resin, sodium polycarboxylate, polyacrylate ammonium salt, a phosphoric ester and an alkoxylated phosphoric ester.

10. The process of claim 9, wherein the step of mixing is followed by a step of dry-milling.

11. The process of claim 9 or 10, wherein it comprises a further step of discharging the dry-milled graphenic into a cooler, thus obtaining a cooled dry-milled graphenic preparation.

12. A graphene-based cementitious composition comprising:
- the graphenic preparation of anyone of claims 1-8 in an amount ranging from 0.5 to 30% by weight, with respect to the amount of the total cementitious composition; and
- a cement,
wherein each of the above components is in solid-dry state.

13. A process for the production of the graphene-based cementitious composition according to claim 12, comprising the steps of:
a) providing the graphenic preparation of anyone of claims 1-8 in an amount of 0.5-30% by weight with respect to the total amount of the graphene-based cementitious composition, and
b) adding cement, thus obtaining a graphene-based cementitious composition.

14. The process of claim 12, wherein the graphenic preparation of step a) is subjected a to dry-milling step before the addition of the cement.

15. A graphene-based concrete formulation comprising:
- the graphene-based cementitious composition according to claim 11 in an amount ranging from 0.5 to 30% by weight with respect to the total concrete; and
- at least one additive component selected from the group consisting of sand, gravel, and hard rock, clay, and marl.

16. A graphene-based concrete comprising:
- the graphenic preparation according to anyone of claims 1-8;
- cement; and
- at least one additive component selected from the group consisting of sand, gravel, and hard rock, clay, and marl.

17. A graphene-based concrete obtainable by using the graphenic preparation of claims 1-8.

18. A use of the graphenic preparation of anyone of claims 1-8 or the graphene-based cementious composition according to claim 12, to produce a graphene-based concrete.
